(19) Europäisches Patentamt
European Patent Office
Office européen des brevets

(11) EP 1 031 610 A1

(12) EUROPEAN PATENT APPLICATION
published in accordance with Art. 158(3) EPC

(43) Date of publication:
30.08.2000 Bulletin 2000/35

(21) Application number: 99940654.9

(22) Date of filing: 03.09.1999

(51) Int. Cl.[7]: C08L 81/02, F04B 39/00
// C08L81:02, C08L23:00,
C08L81:02, C08L23:10

(86) International application number:
PCT/JP99/04795

(87) International publication number:
WO 00/14160 (16.03.2000 Gazette 2000/11)

(84) Designated Contracting States:
DE FR GB

(30) Priority: 04.09.1998 JP 25071498

(71) Applicant:
IDEMITSU PETROCHEMICAL CO., LTD.
Tokyo 108-0014 (JP)

(72) Inventors:
- KOSAKA, Wataru
Ichihara-shi Chiba 299-0107 (JP)
- TOMURA, Toshikazu
Ichihara-shi, Chiba 299-0107 (JP)
- TAMURA, Eiji
Ichihara-shi Chiba 299-0107 (JP)

(74) Representative:
Gille Hrabal Struck Neidlein Prop Roos
Patentanwälte
Bruckner strasse 20
40593 Düsseldorf (DE)

# (54) POLYARYLENE SULFIDE RESIN COMPOSITION AND PART FOR USE IN CONTACT WITH REFRIGERANT

(57) A polyarylene sulfide resin composition comprising (A) 100 parts by weight of a polyarylene sulfide resin in which a melt viscosity at a resin temperature of 300°C and a shear rate of 200 $sec^{-1}$ is between 50 and 1,000 Pa • sec, and (B) 10 to 40 parts by weight of an α-olefin resin having a melting point of 130°C or more, and a refrigerant contact component comprising the composition in a refrigerator, an air-conditioner and other appliances using a flon refrigerant. With respect to a compressor component and the like which are brought into direct contact with a refrigerant, a polyarylene sulfide resin composition which is lightweight and excellent in a heat resistance and a sliding property and which has a balance with a flon refrigerant resistance and a refrigerant contact component using the same are provided.

EP 1 031 610 A1

## Description

Technical Field

The present invention relates to a polyarylene sulfide resin composition and a flon refrigerant contact component. More specifically, it relates to a polyarylene sulfide resin composition which is lightweight and excellent in a heat resistance and a sliding property and which has a balance with a flon refrigerant resistance, and a flon refrigerant contact component using the same.

Background of the Invention

Materials which can appropriately be used for components to be brought into direct contact with a flon refrigerant, for example, valve components, in an air-conditioning compressor, which are lightweight and excellent in an operational response and which have a sliding property and a refrigerant resistance at a high temperature (above 100°C) have been so far developed.

A nylon resin composition was once used in components directly contacted with this refrigerant. However, a hydrogen halide formed by hydrolysis of flon with a minor amount of water contained in flon (for example R22) accelerated decomposition of nylon, and so forth to notably shorten a life of components. Further, a frictional coefficient was great, and a sliding property also posed a problem. Later, a composition obtained by blending polyphenylene sulfide (abbreviated as PPS) with a fluororesin such as polytetrafluoroethylene (abbreviated as PTFE) or the like has been proposed to solve these problems.

In comparison with the nylon material, the composition is markedly improved in a flon resistance, and also excellent in a sliding property. However, a deflection temperature under load is low, and its application to components used at a high temperature and a high pressure is limited. Thus, it is not satisfactory.

The present invention aims to provide, with respect to a compressor component or the like that is brought into direct contact with a flon refrigerant, a polyarylene sulfide resin composition which is lightweight and excellent in a heat resistance and a sliding property and which has a balance with a flon refrigerant resistance, and a refrigerant contact component using the same.

Disclosure of the Invention

The present inventor has assiduously conducted investigations on the above-mentioned problems, and has consequently completed the following inventions.

1. A polyarylene sulfide resin composition comprising (A) 100 parts by weight of a polyarylene sulfide resin in which a melt viscosity at a resin temperature of 300°C and a shear rate of 200 $sec^{-1}$ is between 50 and 1,000 Pa • sec, and (B) 10 to 40 parts by weight of an $\alpha$-olefin resin having a melting point of 130°C or more.
2. A polyarylene sulfide resin composition in which a specific gravity is 1.3 or less, a deflection temperature under low load is 180°C or more, a static friction coefficient is 0.1 or less and a dimensional retention rate in a test for evaluation of a flon refrigerant resistance is 101.0% or less.
3. A polyarylene sulfide resin composition comprising (A) 100 parts by weight of a polyarylene sulfide resin in which a melt viscosity at a resin temperature of 300°C and a shear rate of 200 $sec^{-1}$ is between 50 and 1,000 Pa • sec, and (B) 10 to 40 parts by weight of an $\alpha$-olefin resin having a melting point of 130°C or more, in which a specific gravity is 1.3 or less, a deflection temperature under low load is 180°C or more, a static friction coefficient is 0.1 or less and a dimensional retention rate in a test for evaluation of a flon refrigerant resistance is 101.0% or less.
4. The polyarylene sulfide resin composition as recited in the above 1 or 3, wherein the $\alpha$-olefin resin is polypropylene.
5. A refrigerant contact component for an appliance using a flon refrigerant, which component comprises the polyarylene sulfide resin composition as recited in the above 1 or 3.
6. The refrigerant contact component for the appliance using the flon refrigerant as recited in the above 5, which component is an air-conditioning valve or a slide valve of a compressor of a refrigerator or an air-conditioner.
7. A method of using the refrigerant contact component for the appliance using the flon refrigerant as recited in the above 5 in an air-conditioning valve or a slide valve of a compressor of a refrigerator or an air-conditioner at a high temperature of 100°C or more.

Best Mode for Carrying Out the Invention

[Polyarylene sulfide resin]

The polyarylene sulfide resin used in the present invention is a polymer based on a structural formula [-Ar-S-] (wherein Ar is an arylene group, and S is sulfur). Its typical example is a polyarylene sulfide resin (abbreviated as PAS) represented by the following chemical formula (I)

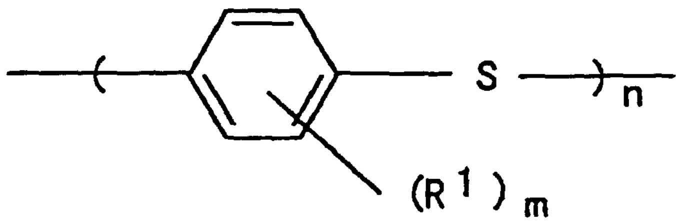

...(1)

(wherein $R^1$ is a substituent selected from an alkyl group having 6 or less carbon atoms, an alkoxy group, a phenyl group, a carboxyl group or its metal salt, a nitro group and halogen atoms such as fluorine, chlorine, bromine and the like, m is an integer of 0 to 4, and n is an average degree of polymerization in the range of 10 to 300).
In case of m=0, it contains preferably at least 70 mol%, more preferably at least 80 mol% of this recurring unit. When this recurring unit is less than 70 mol%, an inherent crystalline component which is characteristic of a crystalline polymer is reduced, and a refrigerant resistance (durability to flon or a refrigerator oil at a high temperature) or a mechanical strength is sometimes unsatisfactory.
It is generally known that PAS includes those having molecular structures which are substantially linear, branched and crosslinked according to the process. PAS used in the present invention may have any of these structures. Further, a homopolymer and a copolymer can also be used.
Examples of the copolymer structural unit include an m-phenylene sulfide unit, an o-phenylene sulfide unit, a p,p'-diphenyleneketone sulfide unit, a p,p'-diphenylenesulfone sulfide unit, a p,p'-biphenylene sulfide unit, a p,p'-diphenylenemethylene sulfide unit, a p,p'-diphenylenecumenyl sulfide unit, a naphthyl sulfide unit and the like.
The polyarylene sulfide resin used in the present invention can be produced by a known method. For example, it can be obtained by subjecting a dihalo aromatic compound and a sulfur source to a polycondensation reaction in an organic polar solvent, and washing and drying a reaction product.
As PAS used in the present invention, a compound in which a melt viscosity at a resin temperature of 300°C and a shear rate of 200 $sec^{-1}$ is between 50 and 1,000 Pa • sec, preferably between 60 and 900 Pa • sec is used.
When the melt viscosity is less than 50 Pa • sec, a refrigerant resistance, a mechanical strength and a sliding property of the refrigerant contact component in the present invention are decreased. Further, when it is more than 1,000 Pa • sec, phenomena such as separation and delamination and formation of voids occur in the molding of the resin composition with the α-olefin resin, and a good molded article is sometimes not obtained.

[α-olefin resin]

The α-olefin resin is a resin polymer resulting from the polymerization by a known method using ethylene, propylene, 1-butene, 1-pentene, 4-methyl-1-pentene, 1-hexene, 1-octene or the like as a starting monomer. Of these, polypropylene is preferable. Any of a homopolymer, a block copolymer and a random copolymer may be used. However, the melting point has to be 130°C or more. When the melting point is less than 130°C, a heat resistance, a mechanical strength and a refrigerant resistance are decreased.

[Mixing]

One hundred parts of the above-described PAS are mixed with 10 to 40 parts by weight, preferably 15 to 30 parts by weight of the α-olefin resin.
When the amount is less than 10 parts by weight, a sliding property is unsatisfactory. When it exceeds 40 parts by weight, a heat resistance, a mechanical strength and a moldability of a molded article are decreased.
Further, it is possible that various additives such as a silane coupling agent, an antioxidant, a heat stabilizer, a lubricant, a plasticizer, an electroconductive agent, a colorant, a pigment and the like are incorporated as required, and dry-blended with a ribbon tumbler, a Henschel mixer, a Banbury mixer, a drum tumbler or the like, and the mixture

is kneaded with a single screw extruder or the like. An appropriate kneading temperature is usually between 280 and 330°C.

In the polyarylene sulfide resin composition of the present invention, a specific gravity is 1.3 or less, a deflection temperature under load (low load) is 180°C or more, a static friction coefficient is 0.1 or less, and a dimensional retention rate in a test for evaluation of a flon refrigerant resistance is 101.0% or less. Incidentally, the specific gravity is measured according to ASTM-D 792, and the deflection temperature under load (low load) is measured according to ASTM-D 648 with low load of 0.46 MPa. The static friction coefficient is measured by a ring-on-disk method using a Suzuki-Matsubara thrust-type frictional wear tester manufactured by Orientec (which will be later described in detail). The dimensional retention rate in the test for the flon refrigerant resistance is measured by charging a test piece, pure water and flon R22 in a pressure container, placing the container in an oven of 120°C, allowing the same to stand for 500 hours, and measuring a dimensional retention rate (before and after the test) of the test piece (which will be later described in detail). The polyarylene sulfide resin composition is lightweight, excellent in the heat resistance and the sliding property, and has the balance with the flon refrigerant resistance.

[Use]

As the refrigerant contact component in the refrigerator, the air-conditioner and the other appliances using the flon refrigerant, an air-conditioning valve, a slide valve and the like can be mentioned. These components were obtained by injection-molding the above-described PAS resin composition of the present invention, and as required, cutting and polishing the product. The components are highly-reliable ones which are extremely lightweight, enriched in the operability and excellent in the heat resistance and the sliding property, and which have the balance with the flon refrigerant resistance.

The present invention is further illustrated specifically with reference to Examples.

[Examples 1 to 7 and Comparative Examples 1 to 6]

The following components were uniformly mixed at mixing ratios shown in Table 1 (Examples) and Table 2 (Comparative Examples) using a Henschel mixer, and then melt-kneaded at 280 to 330°C using a twin-screw extruder (TEM35 manufactured by Toshiba Machine Co., Ltd.) to produce pellets.

Subsequently, an injection-molded article was obtained from the resulting pellets using a 50 t injection-molding machine (J50EP manufactured by The Japan Steel Works, Ltd.) with a flat mold and an air-conditioning valve mold of 80 mm x 80 mm x thickness 3.2 mm. In case of PAS, a cylinder temperature was set at 280 to 330°C, a nozzle temperature at 310 to 330°C and a mold temperature at 130 to 135°C. In case of polyamide 66, a cylinder temperature was set at 260 to 290°C, a nozzle temperature at 270 to 290°C and a mold temperature at 80 to 90°C. The injection-molded article was further polished with #3000 sandpaper or the like as required, and used as a refrigerator contact component.

Using the above-molded test pieces, the specific gravity, the flexural strength, the Izod impact strength (notched), the deflection temperature under load (low load, high load) and the static friction coefficient were measured by the test methods described below, and the test for the flon refrigerant resistance was conducted as described below. The results are shown in Tables 1 and 2.

The components of the resin compositions used in Examples are as follows.

[Polyarylene sulfide resin]

PPS-1: polyphenylene sulfide having a melt viscosity of 161 Pa • sec (T3, semilinear type, made by TOHPREN CO., LTD.)

PPS-2: polyphenylene sulfide having a melt viscosity of 30 Pa • sec (T1, semilinear type, made by TOHPREN CO., LTD.)

PPS-3: polyphenylene sulfide having a melt viscosity of 100 Pa • sec (LN2, linear type, made by TOHPREN CO., LTD.)

PPS-4: polyphenylene sulfide having a melt viscosity of 284 Pa • sec (#160, crosslinked type, made by Tosoh Corp.)

PPS-5: polyphenylene sulfide having a melt viscosity of 100 Pa • sec (LD10, semilinear type, made by Torplene K.K.)

[α-Olefin resin]

PP-1: polypropylene having a melting point of 166°C (E105GM made by Idemitsu Petrochemical Co., Ltd.)
PP-2: polypropylene having a melting point of 159°C (F774M made by Idemitsu Petrochemical Co., Ltd.)
PP-3: polypropylene having a melting point of 168°C (J751HP made by Idemitsu Petrochemical Co., Ltd.)
HDPE: polyethylene having a melting point of 126°C (640UF made by Idemitsu Petrochemical Co., Ltd.)

[Others]

PA66: polyamide
(Leona 1402S made by Asahi Chemical Industry Co., Ltd.)
PTFE: polytetrafluoroethylene
(Lubron L2 made by Daikin Kogyo Co., Ltd.)

Incidentally, the test methods used in Examples are as follows.

[Melt viscosity]

A melt viscosity (Pa • sec) was measured under conditions that a resin temperature was 300°C and a shear rate 200 $sec^{-1}$ using Capillography (manufactured by Toyo Seiki K.K.).

[Melting point]

A melting point was measured using a differential scanning calorimeter (DSC-7 manufactured by Parkin Elmer). Previously, 10 mg of the sample was melted in a nitrogen atmosphere at 230°C for 3 minutes, then cooled to 0° at a rate of 10°C/min, maintained at 0°C for 3 minutes, and then heated at a rate of 10°C/min. The peak top of the maximum peak of the resulting melting endothermic curve was defined as a melting point.

[Specific gravity of a resin composition]

Measured according to ASTM-D 792.

[Flexural strength]

Measured according to ASTM-D 790 using the above-mentioned test pieces.

[Izod impact strength (notched)]

Measured according to ASTM-D 256.

[Deflection temperature under load]

Measured according to ASTM-D 648 under low load of 0.46 MPa and high load of 1.82 MPa.

[Static friction coefficient]

A static friction coefficient was obtained in the following manner using a Suzuki-Matsubara thrust-type frictional wear tester manufactured by Orientec.
A resin ring was obtained by injection molding as in the formation of the above-mentioned test pieces, and a sliding surface was polished with #3000 sandpaper. This product was used as a sample. The measurement was conducted by a ring-on-disk method using an SUS 304 disk as an opposite material. A surface pressure W of 5 $kg/cm^2$ was exerted on the sample, and a very low rotational speed was employed. A pulse-like waveform was recorded by repeating rotation and stopping of the disk. The maximum friction force f and pressure load W (in this case, 5 $kg/cm^2$) were measured, and the static friction coefficient μ was calculated using the following formula. The static friction coefficients

at surface pressures of 10 kg/cm$^2$, 15 kg/cm$^2$, 20 kg/cm$^2$, 25 kg/cm$^2$ were calculated in the same manner, and an average value of these five static friction coefficients was defined as a static friction coefficient.

$$\mu = f/W$$

μ : static friction coefficient
f : friction force (kg/cm$^2$)
W : applied surface pressure (kg/cm$^2$)

[Test for a flon refrigerant resistance]

The weight, the dimension and the flexural strength before the test were measured using the above-described test pieces. Subsequently, a 200 cc SUS 316L pressure container (manufactured by Taiatsu Garasu Kogyo) fitted with a pressure valve was charged with three flexural test pieces and 5.9 g of pure water, and sealed. This container was put in a liquid nitrogen bath. After pure water of the container was completely solidified, the inside of the container was deaerated with a vacuum pump, and 58.7 g of flon R22 was poured into the container through a flon bomb. The container was withdrawn from the liquid nitrogen bath, placed in an oven of 120°C, and allowed to stand for 500 hours. After 500 hours, the container was withdrawn from the oven, and air-cooled for 24 hours. Then, the valve of the container was opened for degassing. The test pieces were withdrawn from the container, and the surfaces were wiped with methyl alcohol, and air-dried. Subsequently, the weight, the dimension (in the resin flow direction) and the flexural strength were measured.

The weight retention rate (%), the dimensional retention rate (%) and the flexural strength retention rate (%) of the samples were obtained by the following formulas, and an average in the three samples was defined as a retention rate.

Weight retention rate (%) = (weight (g) of a test piece after/weight (g) of a test piece before test) x 100

Dimensional retention rate (%) = (dimension (mm) of a test piece after test/dimension (mm) of a test piece before test) x 100

Flexural strength retention rate (%) = (flexural strength (MPa) after test/flexural strength (MPa) before test) x 100

Incidentally, the change in the appearance was visually evaluated according to four grades.

◯ ◯ : Same as before test
◯: Good
△: Bulging and formation of voids occur.
X: Bulging and formation of voids notably occur, and drastic deterioration is observed without retaining the outer shape.

Further, the total evaluation of the above-described retention rates and change in the appearance was conducted according to four grades.

◯ ◯ : Excellent
◯: Good
△: Slightly bad
X: Bad

[Evaluation of a surface appearance of a molded article]

The surface smoothness was visually observed, and evaluated according to three grades.

◯: The surface smoothness is good.
△: The surface smoothness is slightly bad.
X: The surface smoothness is bad.

Table 1

| | | Unit | Ex.1 | Ex.2 | Ex.3 | Ex.4 | Ex.5 | Ex.6 | Ex.7 |
|---|---|---|---|---|---|---|---|---|---|
| Material | PPS-1 | Parts by weight | 100 | 100 | | | | 100 | 100 |
| | PPS-2 | " | | | | | | | |
| | PPS-3 | " | | | 100 | | | | |
| | PPS-4 | " | | | | 100 | | | |
| | PPS-5 | " | | | | | 100 | | |
| | PA66 | " | | | | | | | |
| | PP-1 | " | 17.6 | 25.0 | 17.6 | 17.6 | 17.6 | | |
| | PP-2 | " | | | | | | 17.6 | |
| | PP-3 | " | | | | | | | 17.6 |
| | HDPE-1 | " | | | | | | | |
| | PTFE | " | | | | | | | |
| Lightweight property | Specific gravity | | 1.24 | 1.23 | 1.25 | 1.24 | 1.26 | 1.24 | 1.24 |
| Properties of material | Flexural strength | MPa | 101 | 93 | 98 | 103 | 104 | 100 | 102 |
| | Izod impact strength (notched) | $KJ/m^2$ | 3.2 | 4.0 | 3.4 | 3.4 | 3.8 | 3.2 | 3.2 |
| | Deflection temperature under load (low load) | °C | 202 | 185 | 201 | 202 | 205 | 199 | 200 |
| | Deflection temperature under load (high load) | °C | 110 | 100 | 109 | 110 | 111 | 107 | 108 |
| Sliding property | Static friction coefficient | | 0.05 | 0.05 | 0.05 | 0.05 | 0.06 | 0.05 | 0.05 |
| Refrigerant resistance | Weight retention rate | % | 104.6 | 105.6 | 103.9 | 103.0 | 101.3 | 104.9 | 104.2 |
| | Dimensional retention rate | % | 100.5 | 100.7 | 100.9 | 100.4 | 100.4 | 100.8 | 100.3 |
| | Flexural strength retention rate | % | 80.6 | 79.5 | 81.4 | 85.3 | 83.5 | 80.7 | 82.0 |
| | Change in appearance | | ○ | ○ | ○ | ○ | ○ | ○ | ○ |
| | Total evaluation | | ○ | ○ | ○ | ○ | ○ | ○ | ○ |

Table 1 (continued)

| | | Unit | Ex.1 | Ex.2 | Ex.3 | Ex.4 | Ex.5 | Ex.6 | Ex.7 |
|---|---|---|---|---|---|---|---|---|---|
| Molded article | Evaluation of surface appearance | | ○ | ○ | ○ | ○ | ○ | ○ | ○ |
| Ex. - Example | | | | | | | | | |

Table 2

| | | Unit | CEx.1 | CEx.2 | CEx.3 | CEx.4 | CEx.5 | CEx.6 |
|---|---|---|---|---|---|---|---|---|
| Material | PPS-1 | Parts by weight | 100 | | | 100 | | 100 |
| | PPS-2 | " | | | | | 100 | |
| | PPS-3 | " | | 100 | | | | |
| | PPS-4 | " | | | | | | |
| | PPS-5 | " | | | | | | |
| | PA66 | " | | | 100 | | | |
| | PP-1 | " | | | | | 17.6 | 5.3 |
| | PP-2 | " | | | | | | |
| | PP-3 | " | | | | | | |
| | HDPE-1 | " | | | | 53.8 | | |
| | PTFE | " | 42.9 | | | | | |
| Lightweight property | Specific gravity | | 1.52 | 1.35 | 1.14 | 1.14 | 1.25 | 1.31 |
| Properties of material | Flexural strength | MPa | 100 | 142 | 118 | 68 | 80 | 130 |
| | Izod impact strength (notched) | $KJ/m^2$ | 3.3 | 1.9 | 4.4 | 2.0 | 2.4 | 2.5 |
| | Deflection temperature under load (low load) | °C | 168 | 250 | 230 | 175 | 201 | 230 |
| | Deflection temperature under load (high load) | °C | 106 | 108 | 70 | 80 | 108 | 105 |
| Slidng property | Static friction coefficient | | 0.05 | 0.17 | 0.06 | 0.06 | 0.06 | 0.11 |

Table 2 (continued)

| | | Unit | CEx.1 | CEx.2 | CEx.3 | CEx.4 | CEx.5 | CEx.6 |
|---|---|---|---|---|---|---|---|---|
| Refrigerant resistance | Weight retention rate | % | 103.5 | 100.1 | un-measurable | 106.7 | 107.1 | 100.8 |
| | Dimensional retention rate | % | 100.8 | 100.1 | un-measuable | 102.6 | 101.9 | 100.7 |
| | Flexural strength retention rate | % | 87.2 | 101.2 | un-mesaurable | 79.0 | 79.8 | 95.9 |
| | Change in appearance | | ○ | ○○ | X | △ | △ | ○ |
| | Total evaluation | | ○ | ○○ | X | △ | △ | ○ |
| Molded article | Evaluation of surface appearance | | △ | ○ | ○ | △ | ○ | ○ |
| CEx. - Comparative Example | | | | | | | | |

Industrial Applicability

The resin composition of the present invention is lightweight with a specific gravity of 1.3 or less, has a deflection temperature under load (low load) of 180°C or more and a static friction coefficient of 0.1 or less, and is excellent in a flon refrigerant resistance. Meanwhile, when only PPS is used in a molding material as shown in Comparative Example 2, especially a static friction coefficient that directly influences a sliding property is great. Thus, it is inappropriate. A composition obtained by blending PPS with PTFE as shown in Comparative Example 1 has a high specific gravity, a low deflection temperature under load, and a slightly bad surface smoothness of a molded article. Thus, it is inappropriate. A composition obtained by blending PPS with HDPE having a slightly low melting point as shown in Comparative Example 4 has a low deflection temperature under load, a bad flon refrigerant resistance with bulging and formation of voids observed, and a slightly bad surface smoothness of a molded article. Thus, it is inappropriate.

## Claims

1. A polyarylene sulfide resin composition comprising (A) 100 parts by weight of a polyarylene sulfide resin in which a melt viscosity at a resin temperature of 300°C and a shear rate of 200 $sec^{-1}$ is between 50 and 1,000 Pa • sec, and (B) 10 to 40 parts by weight of an α-olefin resin having a melting point of 130°C or more.

2. A polyarylene sulfide resin composition in which a specific gravity is 1.3 or less, a deflection temperature under low load is 180°C or more, a static friction coefficient is 0.1 or less and a dimensional retention rate in a test for evaluation of a flon refrigerant resistance is 101.0% or less.

3. A polyarylene sulfide resin composition comprising (A) 100 parts by weight of a polyarylene sulfide resin in which a melt viscosity at a resin temperature of 300°C and a shear rate of 200 $sec^{-1}$ is between 50 and 1,000 Pa • sec, and (B) 10 to 40 parts by weight of an α-olefin resin having a melting point of 130°C or more, in which a specific gravity is 1.3 or less, a deflection temperature under low load is 180°C or more, a static friction coefficient is 0.1 or less and a dimensional retention rate in a test for evaluation of a flon refrigerant resistance is 101.0% or less.

4. The polyarylene sulfide resin composition as claimed in claim 1 or 3, wherein the α-olefin resin is polypropylene.

5. A refrigerant contact component for an appliance using a flon refrigerant, which component comprises the polyarylene sulfide resin composition as claimed in any of claims 1 to 3.

6. The refrigerant contact component for the appliance using the flon refrigerant as claimed in claim 5, of which component is an air-conditioning valve or a slide valve of a compressor of a refrigerator or an air-conditioner.

**7.** A method of using the refrigerant contact component for the appliance using the flon refrigerant as claimed in claim 5 in an air-conditioning valve or a slide valve of a compressor of a refrigerator or an air-conditioner at a high temperature of 100°C or more.

## INTERNATIONAL SEARCH REPORT

International application No.
PCT/JP99/04795

A. CLASSIFICATION OF SUBJECT MATTER
Int. $Cl^6$ C08L81/02, F04B39/00
// (C08L81/02, C08L23:00)(C08L81/02, C08L23:10)

According to International Patent Classification (IPC) or to both national classification and IPC

B. FIELDS SEARCHED

Minimum documentation searched (classification system followed by classification symbols)
Int. $Cl^6$ C08L81/00-81/02, C08L23/00-23/24

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP, 64-51462, A (Shin-Etsu Polymer Co., Ltd.), 27 February, 1989 (27.02.89), Claims; page 2, lower left column; Examples (Family: none) | 1-4 |
| X | JP, 4-164962, A (Polyplastics Co.), 10 June, 1992 (10.06.92), Claims; page 3, lower left column to lower right column; Examples & EP, 507965, A1 | 1-4 |
| X | JP, 2-129245, A (NIPPON PETROCHEMICALS CO., LTD.), 17 May, 1990 (17.05.90), Claims; page 4, lower left column; Examples & US, 5204405, A & EP, 368295, A | 1-4 |
| X | JP, 8-337705, A (KANEKA CORPORATION), 24 December, 1996 (24.12.96), Claims; Par. No. [0014]; Examples (Family: none) | 1-4 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>30 November, 2012 (30.11.12) | Date of mailing of the international search report<br>14 December, 1999 (14.12.99) |
| Name and mailing address of the ISA/<br>Japanese Patent Office | Authorized officer |
| Facsimile No. | Telephone No. |

Form PCT/ISA/210 (second sheet) (July 1992)

**INTERNATIONAL SEARCH REPORT**

International application No.
PCT/JP99/04795

C (Continuation). DOCUMENTS CONSIDERED TO BE RELEVANT

| Category* | Citation of document, with indication, where appropriate, of the relevant passages | Relevant to claim No. |
|---|---|---|
| A | JP, 63-318386, A (TOYODA GOSEI CO., LTD., Nippon Denso Co., Ltd.), 27 December, 1988 (27.12.88), Claims; page 2, lower left column to lower right column; Examples (Family: none) | 1-7 |

Form PCT/ISA/210 (continuation of second sheet) (July 1992)